# EUROPEAN PATENT SPECIFICATION

(11) **EP 1 394 429 B1**
(45) Date of publication and mention of the grant of the patent: **02.05.2007**
(21) Application number: 03019412.0
(22) Date of filing: 28.08.2003
(51) Int. Cl.: F16C 33/66, F16C 33/80, F16C 35/04

(54) **A bearing housing and a seal assembly in such a bearing housing**
Lagergehäuse mit einer Dichtungsanordnung
Logement de palier muni d'un dispositif d'échantéité

(30) Priority: 30.08.2002 SE 0202569
(43) Date of publication of application: 03.03.2004
(73) Proprietor: Aktiebolaget SKF, 415 50 Göteborg (SE)
(72) Inventor: Olsson, Henrik, 641 45 Katrineholm (SE); Stendahl, Jörgen, 643 93 Vingaker (SE); Clasborn, Kjell, 641 52 Katrineholm (SE)
(74) Representative: Westman, Per Börje Ingemar

(56) References cited:
- US-A- 4 619 535
- US-A- 5 494 173

## Description

The present invention refers to a bearing housing and a seal assembly in such a bearing housing, and it relates particularly to a split bearing housing having oil ring lubrication and a labyrinth seal for use for preventing oil from leaking out of the bearing housing.

Bearing housings of this type are known from e.g. US 4619535.

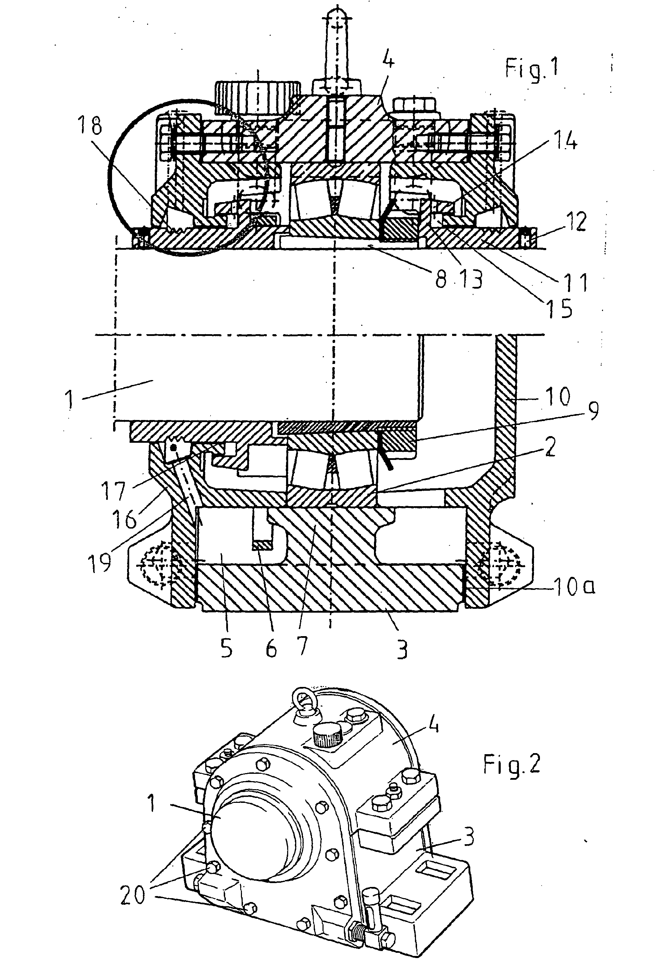

Figs. 1 and 2 of the accompanying drawings illustrates a prior art embodiment of such a bearing housing, and

Fig. 1 shows in cross section a prior art bearing housing for use with oil ring lubricated bearings, and
Fig. 2 is a schematical perspective side view of the prior art bearing housing according to Fig. 1.

In Fig. 1 is shown in cross section a prior art bearing housing manufactured by SKF Mekan AB and referred to as a SOFN bearing housing, which is adapted for oil-ring lubrication. The upper half of the drawing shows the housing with a shaft extending through the housing, whereas the lower half of the drawing shows the housing with a shaft projecting only from the left hand side of the bearing housing.

The SOFN bearing housing supports a shaft 1 in a rolling bearing 2, in the embodiment shown, a spherical roller bearing. The bearing housing is split along a substantially horizontal line, thus that the housing has a lower half 3 and an upper half 4, which are interconnected by not further shown bolts. In the lower part of the housing there is a space 5 used as a reservoir for oil, in which space 5 an oil transport ring 6 is arranged to be partly immersed. This oil transport ring 6 will pick up oil from the reservoir space 5 and let it be thrown off above this space when rotating with the shaft, thereby throwing oil into the bearing surfaces to be lubricated. The lower half 3 of the prior art bearing housing shown in Fig. 1 has a central upwardly projecting, semicircular flange 7 forming the lower half of the seat for the outer ring of the bearing. The inner envelope surface of the upper bearing half 4 forms the other half of the bearing seat. The two bearing seat halves thereby form a large-diameter, substantially cylindrical opening through the bearing housing. Due to the positioning of the oil reservoir space 5 this prior art bearing housing is not symmetrical about the axis of the shaft 1. In the embodiment shown the bearing 2 has a taper bore and is mounted on the shaft on a taper sleeve 8.

At one side of the bearing there is provided a lock nut 9 for securing the bearing against movement in that axial direction. In case the shaft is not projecting outside the housing on that side, as shown in the lower part of this figure, a disc-shaped end lid 10 is fitted by bolts (not shown) to the upper and lower bearing housing halves 3, 4. As the end lid also covers and forms a side wall of the oil reservoir space 5, it is of course vital, that the lid is securely sealed off at 10a for preventing leakage from the oil reservoir.

On the side of the bearing 2, where the shaft 1 extends out of the bearing housing, i.e. in the upper half of the figure at both sides of the bearing there is mounted a sleeve 11 around the shaft 1, and each sleeve is fixedly mounted and secured by means of a set screw 12. The sleeve 11 is at its side turned towards the bearing provided with a radially extending flange 13, which at a distance from the sleeve surface has an axially outwardly extending edge 14, whereby is formed a circumferential axial groove 15 with its open side facing outwardly, away from the bearing. The side of the housing, through which the shaft 1 extends is fitted with an end cover 16, having an inner envelope surface closely fitting around the sleeve 11 and having an axially extending shoulder 17 positioned and dimensioned to fit into the groove 15, when the end cover 16 is mounted axially. The inevitable, small slot between the inner envelope surface of the end cover and the outer envelope surface of the sleeve 11, and the small spaces between the walls of the groove 15 and the shoulder 17 form together a labyrinth seal, which shall prevent the oil contained in the bearing housing from leaking out along the shaft, when this oil due to the action of the oil ring 6, splashes around in the housing. For avoiding that any leakage beyond the labyrinth seal shall not reach the outside of the bearing housing, the outer envelope surface of the sleeve 11 is provided with a number of circumferential notches 18, positioned between the axially outer side of the end cover and the outwardly extending edge 14 thereof, and these notches 18 are positioned at a channel 19 returning any oil which appears there to the oil reservoir space 5.

It is evident, that the arrangement with the end cover 16 and an integrated portion thereof forming a part of the labyrinth seal, means that the mounting of the bearing housing, and particularly at the area encircled in Fig. 1 is an operation which must be carried out very carefully.

From Fig. 2, which shows the exterior of the prior bearing housing according to Fig. 1, it can be seen that the bearing housing has a large number of components, and in particular a large number of bolts 20 for attaching the end lid 10 and/or the end covers 16, in the embodiment shown 9 bolts for each lid or cover. The large number of components and the extensive work required for the mounting and dismounting at any subsequent maintenance operation, means that the prior art housing will be rather expensive and it will require a very long mounting and dismounting time.

The purpose of the present invention is to provide a split bearing housing adapted for oil-ring lubrication and having a labyrinth seal for preventing oil leakage, but which has a substantially lower number of components and requiring a much lower number of mounting steps than the above described prior art bearing housing, thereby making the new bearing housing less expensive and above all much easier to assemble, and this has been obtained in that the bearing housing has been given the features defined in the accompanying claim 1.

Hereinafter the invention will be further described by way of a non-limiting embodiment shown in the accompanying drawings 3-5.

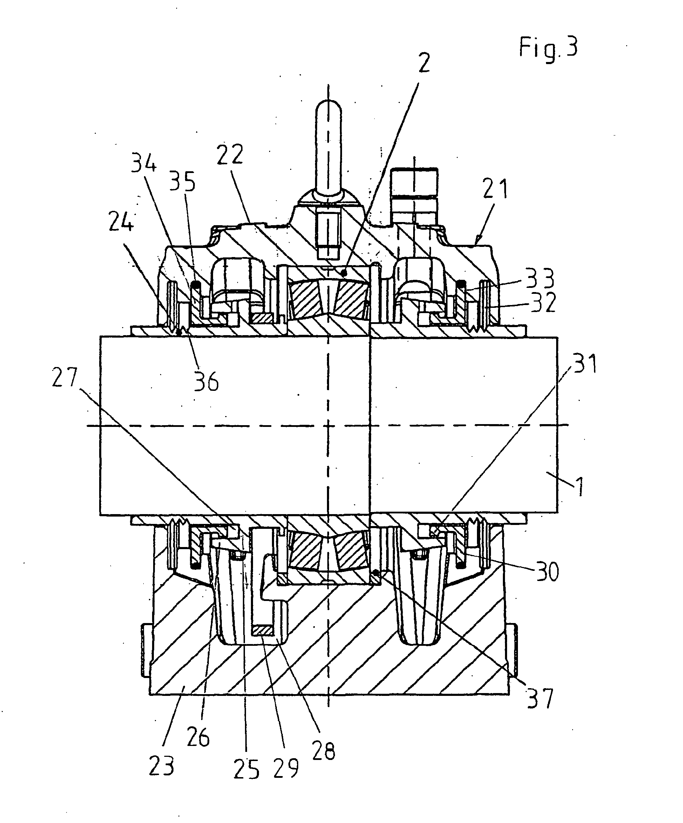

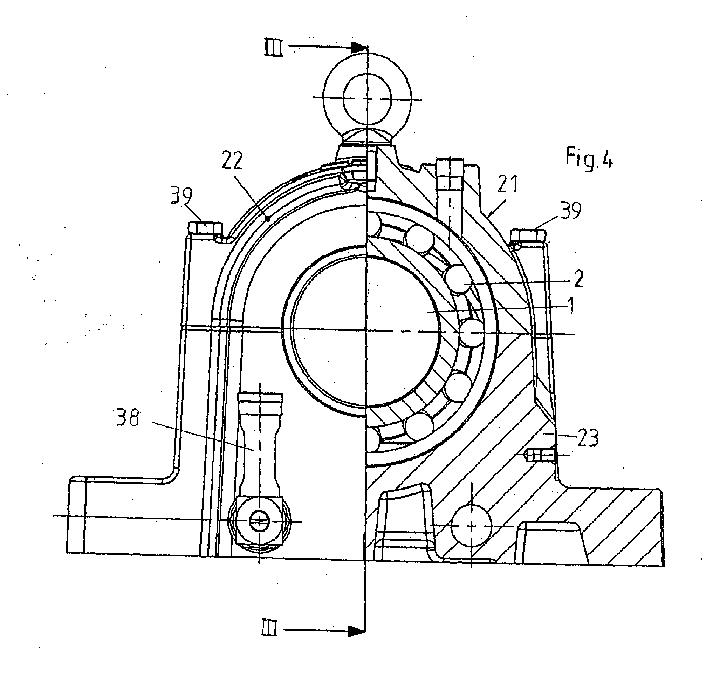

Fig. 3 is a view corresponding to Fig. 1 and showing in a section along lines III-III in Fig. 4, an embodiment of the bearing housing according to the invention and including a seal assembly.

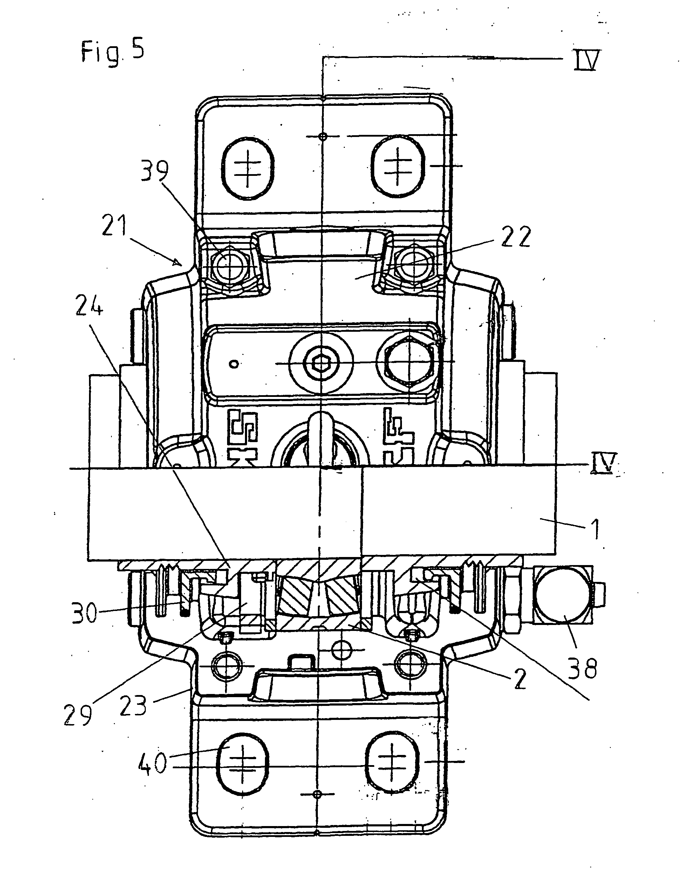

Fig. 4 is a side view showing the bearing housing according to the invention in a side view wherein the right hand half of the housing is shown in cross section aong lne IV-IV in Fig. 5, and Fig. 5 shows the bearing housing according to the invention in a view from above, and where one half of the bearing housing has been shown in a cross section.

Fig. 3 shows in a cross sectional view corresponding to Fig. 1 of the prior art embodiment of the bearing housing, a bearing housing 21, in which a shaft 1 is supported in a spherical roller bearing 2. Like the prior art bearing housing, the bearing housing 21 has an upper half 22 and a lower half 23 forming together an internal, cylindrical seat for the outer bearing ring. Also in this case there is an inner sleeve 24 fitted around the shaft 1, and which sleeve has a radially extending circumferential flange 25, which at a distance from the sleeve surface has an axially outwardly extending edge 26, whereby is formed a circumferential axial groove 27 with its open side facing outwardly, away from the bearing, thereby forming an inner labyrinth sealing ring, which thus in the embodiment illustrated is made integral with the sleeve 24. In the lower half 23 of the bearing housing is arranged a space 28 acting as an oil reservoir, and in which is immersed an oil pick-up ring 29, which is arranged to rotate when the shaft rotates in the bearing, thereby continuously lifting oil from the reservoir 28 and splashing it into the bearing 2.

For preventing the oil from leaking out of the housing through the side openings where the shaft 1 passes there is provided a separate, outer labyrinth seal ring 30, having a substantially L-shaped cross section and having, in mounted position, its axially extending shank portion 31 projecting into the circumferential axial groove 27 in the first labyrinth ring, thereby forming a labyrinth seal. The outer labyrinth ring 30 thus is arranged to form together with the rotating outer envelope surface of the sleeve 24, a very thin slot as the sleeve rotates together with the shaft.

The upper and the lower halves 22, 23 of the bearing housing, differ from those according to the prior art embodiment shown in Figs. 1 and 2, in that they have side gables arranged to fit closely around the sleeve 24, thereby leaving only a very small slot between the gable opening and the sleeve surface. In the inner surface of the upper bearing housing half 22 near each one of the gable openings are provided a first and a second circumferential groove 32 and 33, respectively. The outer one of these grooves 32 is intended to take up an end cover in case the bearing housing shall be used to support a shaft end. In the second groove 33, which is spaced apart from the first, outer groove 32 is positioned the axially extending shank 34 of the L-shaped second labyrinth ring 30. An elastic O-ring seal 35 is positioned around the shank 34 of the separate second labyrinth ring, which acts for sealingly pressing against the bottom of the second groove 33 when the shank 34 is mounted in the groove 35. The sleeve 24 is provided with a grooved portion 36, which, when the assembly has been mounted, is situated between the two grooves 32, 33 in the upper bearing housing half 22. The grooves 32, 33 continue along a part of the wall of the lower bearing housing half 23, thereby giving an end cover in the first, outer groove 32 and the radial shank 34 of the second labyrinth ring 30 a better guidance. The grooved portion 36 of the sleeve 24 will drain any oil, which might pass the labyrinth seal, to the oil reservoir 28.

In the upper part of the bearing housing shown in Fig. 3, the bearing is arranged as a non-locating bearing, whereas the lower part shows an arrangement where the bearing is a locating bearing, which is achieved by positioning a spacing ring 37 between each side of the bearing 2 and an adjacent shoulder in the bearing housing.

Fig. 4 shows the bearing housing according to Fig. 3, and wherein the section line III-III corresponds to the view according to Fig. 3. The left hand side of the bearing housing is shown in a planar side view, whereas the right hand side is shown in a section along line IV-IV in Fig. 5. The view shows the bearing housing 21 with its upper and lower halves 22 and 23 respectively, in which the bearing 2 supporting the shaft 1 is arranged. In the left hand side it can be seen that there is provided an oil level gauge 38, on which can be read off the current oil level in the internal oil reservoir 28 (see Fig. 3). From this view can also be seen that the only bolts needed for interconnecting the parts of the housing are those shown at 39, i.e. only four bolts. Also in the prior art embodiment of the bearing housing according to Figs. 1 and 2 as can be seen in Fig. 2 those four bolts are also needed in the earlier SOFN bearing housing for interconnecting the bearing housing halves 3 and 4, whereas the new solution according to the present invention has side gables integrated with the rest of the bearing housing halves and therefore does not need the additional 2×9 bolts used in the SOFN housing for attaching the side covers. The lower part 23 of the bearing housing as can be seen is further provided with four elongated bores 40 intended to take up four bolts for attaching the bearing housing to a support surface. As can be seen in Fig. 2 the older designs of such housings are also provided with comparative bores.

This means that the new bearing housing has a substantially smaller number of components incorporated, thereby reducing the manufacturing costs and also the time required for mounting the bearing housing, in spite of the fact that the resulting bearing housing will be as well sealed off against the exterior as the earlier known bearing housings, such as for instance the SOFN housing.

The method of mounting the bearing housing according to the present invention is the following:

The lower bearing half 23 is positioned on the support surface. Attachment bolts are fitted through the bores 40, but are not tightened. The oil level gauge 38 is installed, preferably on the side of the bearing housing opposite to that where the oil pick up ring 29 is (see Fig. 5), and the maximum and minimum oil levels are indicated on the gauge.
The sleeve 24 forming the inner labyrinth ring is axially mounted on the shaft 1 and the oil pick up ring 29 is mounted axially on the sleeve 24.
Thereupon the bearing 2 is mounted on the shaft 1 either directly on a stepped shaft or via an adapter sleeve (not shown).
Thereafter the outer labyrinth ring 30 is mounted axially on the inner labyrinth ring or sleeve 24, and the O-ring 35 is positioned on the outer end of the shank 34 of the outer labyrinth ring 30. If the bearing housing shall support a bearing having a shaft projecting out of both its gable openings, the same procedure is repeated on the opposite side of the bearing, but if not an end cover (not shown) is inserted in groove 32.
After these steps, and when it has been checked that the different parts of the seal assembly or seal assemblies are in correct positions, the sleeve or inner labyrinth ring 24 is arrested against the shaft 1 by tightening (not shown) set screws (compare set screws 12 in the prior art embodiment shown in Fig. 1).
Thereupon the shaft 1 with bearing 2 and seal(s) mounted thereon is laid (substantially radially) into the lower bearing housing half 23, thus that the bearing 2 rests with its outer race ring against the seat in the lower bearing half.
Thereupon the lower bearing housing half 23 is carefully aligned and the attachment bolts in the bores 40 are lightly tightened.
Oil is then filled up in the bearing housing to the indicated maximum level.
Thereafter the surfaces of the two bearing housing halves 23, 22 are covered with an oil-resistant sealant, whereupon the upper half 22 is placed (radially) over the lower half 23, whereby the radially projecting shank 34 of the outer labyrinth ring 30 will enter into the grove 33 in the upper housing half 22, thereby elastically deforming the O-seal ring 35. The bolts 39 are inserted in their corresponding bores and are tightened to recommended torque in order to join the upper and lower bearing housing halves.
Thereupon the bolts for attachment of the bearing housing to the supporting surface are fully tightened.

It is preferable that the bearing housing halves are mounted to each other with aid of previously known guiding pins (not shown) for facilitating a correct positioning of the two bearing housing halves relative to each other.

Thus it is evident that the time required for mounting the bearing housing according to the invention is substantially shorter that the time required for mounting the prior art design, as the mounting steps described hereabove are as many for the older design plus the need for tightening eighteen additional end cover bolts. The mounting of the labyrinth seal according to the new solution is simple as this labyrinth seal has a separate L-shaped ring member 30, which can be easily mounted by being pushed axially onto the sleeve 24 and then be retained in a safe manner by being affixed in the groove 33 in the upper bearing half 22, when this is positioned on the lower housing half 23. The sealing effect is well comparable to that of the old, prior art solution.

The invention is not limited to the embodiment shown in Figs. 3-5, but variants and modifications can be made to components and arrangements within the scope of the accompanying claims.

## Claims

1. A bearing housing (21) having oil ring lubrication and a labyrinth seal for use for preventing oil from leaking out of the bearing housing, and being split along a substantially horizontal plane into an upper bearing housing half (22) and a lower bearing housing half (23), and which housing halves (22, 23) have mating seat surfaces for carrying a rolling bearing (2) supporting a shaft (1), and incorporating in combination, an oil reservoir space (28) located in the lower housing half (23), an oil pick up ring (29) arranged to straddle the shaft (1) in a manner to be partly immersed in the oil reservoir space (28) and rotating under influence of the rotating shaft (1), thereby being capable of transferring oil from the space (28) to the bearing (2), a first inner labyrinth sealing ring formed as a sleeve (24) fitted around the shaft (1) to follow the rotation thereof and axially spaced apart from the bearing (2), said sleeve (24) forming a circumferential axial groove (27) with its open side facing away from the bearing (2), and a second, outer labyrinth sealing part (30) , projecting with a portion (31) axially into the said axial groove (27) thereby forming a labyrinth seal with this,
**characterized** therein,
that the upper bearing housing half (22) and the lower bearing housing half (23) have both gable wall openings closely fitting around the sleeve (24) of the first labyrinth sealing ring, and that the second outer labyrinth sealing part (30) is a separate ring member having an axially projecting portion (31) entering in the said axial groove (27) and another portion (34) being retained in a substantially radial, circumferential groove (33) formed in the inner surface of the upper bearing housing half (22).

2. A bearing housing (21) as claimed in claim 1,
**characterized** therein,
that the radial, circumferential groove (33) is formed also in at least a part of the inner surface of the lower bearing housing half (23).

3. A bearing housing (21) as claimed in claim 1 or 2,
**characterized** therein,
that the second, outer labyrinth ring (30) is a separate ring having a substantially L-shaped cross section, with an axial shank (31) projecting into the axial groove (27) in the sleeve (24) of the first labyrinth seal part, and a substantially radial shank (34) projecting into the groove (33) in the housing halves, and being retained in this, whereas the axial shank (31) is positioned at a short distance from the outer envelope surface of the said sleeve (24) for forming a slot with this sleeve (24).

4. A bearing housing (21) as claimed in 3,
**characterized** therein,
that a resilient member (35) is positioned between the outer edge of the radial shank (34) of the second labyrinth part (30) and the bottom of the housing groove (33).

5. A bearing housing (21) as claimed in 4,
**characterized** therein,
that the resilient member (35) is a resilient O-ring seal.

6. A bearing housing (21) as claimed in anyone of the preceding claims,
**characterized** therein,
that the sleeve (24) of the first labyrinth seal part axially outside the position for the axial groove (27) is provided with surface formations (36) in the outer envelope surface, communicating with the oil reservoir space (28) for draining any oil leaking through the labyrinth seal to the oil reservoir space.

## Patentansprüche

1. Lagergehäuse (21) mit einer Ölringschmierung und einer Labyrinthdichtung zum Vermeiden, dass Öl aus dem Lagergehäuse heraus leckt, wobei das Lagergehäuse entlang einer im wesentlichen horizontalen Ebene in eine obere Lagergehäusehälfte (22) und eine untere Lagergehäusehälfte 23 geteilt ist, die Gehäusehälften (22, 23) zueinander passende Sitzflächen haben, um ein Wälzlager (2), das eine Welle (1) lagert, abzustützen, und in Kombination einen Raum (28) als Ölreservoir, der in der unteren Gehäusehälfte (23) angeordnet ist, einen Ölaufnahmering (29), der in solcher Weise rittlings auf der Welle (1) angeordnet ist, dass er teilweise in den Ölreservoirraum (28) eingetaucht ist und sich unter dem Einfluss der rotierenden Welle (1) dreht und **dadurch** in der Lage ist, Öl aus dem Raum (28) zu dem Lager (2) zu transferieren, einen ersten Labyrinthdichtring, der als Hülse (24) ausgebildet ist, die mit axialem Abstand zu dem Lager (2) auf der , Welle (1) sitzt, um deren Rotation zu folgen, wobei die Hülse (24) eine axiale Umfangsnut (27) mit einer von dem Lager (2) weg weisenden offenen Seite bildet, und ein zweites, äußeres Labyrinthdichtungsteil (30) umfasst, das mit einem Bereich (31) axial in die Axialnut (27) hineinragt und **dadurch** eine Labyrinthdichtung mit dieser bildet, **dadurch gekennzeichnet, dass** die obere Lagergehäusehälfte (22) und die untere Lagergehäusehälfte (23) beide Giebelwandöffnungen aufweisen, die eng um die Hülse (24) des ersten Labyrinthdichtungsrings sitzen, und dass das zweite, äußere Dichtungsteil (30) ein separates Ringelement mit einem axial vorspringenden Bereich (31) ist, der in die Axialnut (27) eindringt, und einen weiteren Bereich (34) aufweist, der in einer im wesentlichen radialen Umfangsnut (33) gehalten ist, die in der Innenfläche der oberen Lagergehäusehälfte (22) ausgebildet ist.

2. Lagergehäuse (21) nach Anspruch 1, **dadurch gekennzeichnet, dass** die radiale Umfangsnut (33) auch in wenigstens einem Teil der Innenfläche der unteren Lagergehäusehälfte (23) ausgebildet ist.

3. Lagergehäusehälfte nach Anspruch 1 oder 2, **dadurch gekennzeichnet, dass** der zweite, äußere Labyrinthring (30) ein separater Ring mit einem im wesentlichen L-förmigen Querschnitt ist mit einem axialen Schaft (31), der in die axiale Nut (27) in der Hülse (24) des ersten Labyrinthdichtungsteils hineinragt, sowie einem im wesentlichen radialen Schaft (34), der in die Nut (33) in den Gehäusehälften hineinragt und in dieser gehalten ist, während der axiale Schaft (31) in einem geringen Abstand von der äußeren Hüllfläche der Hülse (24) zur Ausbildung eines Schlitzes mit dieser Hülse (24) positioniert ist.

4. Lagergehäuse (21) nach Anspruch 3, **dadurch gekennzeichnet, dass** ein nachgiebiges Element (35) zwischen der Außenkante des radialen Zapfens (34) des zweiten Labyrinthteils (30) und dem Grund der Gehäusenut (33) angeordnet ist.

5. Lagergehäuse nach Anspruch 4, **dadurch gekennzeichnet, dass** das nachgiebige Element (35) eine nachgiebige O-Ringdichtung ist.

6. Lagergehäuse nach einem der vorhergehenden Ansprüche, **dadurch gekennzeichnet, dass** die Hülse (24) des ersten Labyrinthdichtungsteils axial außerhalb der Position für die Axialnut (27) mit Oberflächeformation (36) in der äußeren Hüllfläche versehen ist, die mit dem Ölreservoirraum (28) in Verbindung stehen, um jegliches Öl, das durch die Labyrinthdichtung leckt, an den Ölreservoirraum abzuleiten.

## Revendications

1. Palier pour roulement (21) comprenant une lubrification par bague de huilage et un joint d'étanchéité du type labyrinthe destiné à être utilisé dans le but d'empêcher l'huile de fuir hors du palier pour roulement et étant partagé le long d'un plan sensiblement horizontal en une moitié supérieure (22) de palier pour roulement et en une moitié inférieure (23) de palier pour roulement, lesquelles moitiés de palier (22, 23) comportant des surfaces de siège associées destinées à porter un roulement (2) supportant un arbre (1) et incorporant, en combinaison, un espace (28) formant réservoir d'huile situé dans la moitié inférieure (23) du palier, une bague (29) de prélèvement d'huile agencée de manière à chevaucher l'arbre (1) de façon à être partiellement immergée dans l'espace (28) formant réservoir d'huile, et tournant sous l'influence de l'arbre (1), en étant de ce fait apte à transférer de l'huile depuis l'espace (28) jusqu'au roulement (2), une première bague d'étanchéité intérieure du type labyrinthe en forme de manchon (24) montée de façon étroite autour de l'arbre (1) pour suivre la rotation de celui-ci et espacée axialement du roulement (2), ledit manchon (24) formant une gorge axiale circonférentielle (27) dont le côté ouvert est orienté à l'écart du roulement (2), et une deuxième partie d'étanchéité, extérieure, (30) du type labyrinthe faisant saillie par une partie (31), axialement, dans ladite gorge axiale (27) en formant de ce fait avec elle un joint du type labyrinthe,
**caractérisé en ce que**
la moitié supérieure (22) de palier pour roulement et la moitié inférieure (23) de palier pour roulement comportent deux ouvertures de paroi de flanc qui sont adaptées étroitement autour du manchon (24) de la première bague d'étanchéité du type labyrinthe et **en ce que** la deuxième partie d'étanchéité extérieure (30) du type labyrinthe est un élément annulaire séparé comportant une partie (331) qui fait saillie axialement, pénétrant dans ladite gorge axiale (27) et une autre partie (34) qui est retenue dans une gorge circonférentielle sensiblement radiale (33) formée dans la surface intérieure de la moitié supérieure (22) du palier pour roulement.

2. Palier pour roulement (21) selon la revendication 1,
**caractérisé en ce que**
la gorge circonférentielle radiale (33) est également formée dans au moins une partie de la surface intérieure de la moitié inférieure (23) du palier pour roulement.

3. Palier pour roulement (21) selon la revendication 1 ou 2,
**caractérisé en ce que**
la deuxième bague (30), extérieure, de type labyrinthe est une bague séparée ayant une section transversale sensiblement en forme de L, avec une partie saillante axiale (31) qui fait saillie jusque dans la gorge axiale (27) du manchon (24) de la première partie d'étanchéité du type labyrinthe, et une partie saillante sensiblement radiale (34) qui fait saillie jusque dans la gorge (33) des moitiés de palier et qui est retenue dans celle-ci, tandis que la partie saillante axiale (31) est positionnée à faible distance de la surface d'enveloppe extérieure dudit manchon (24) en vue de former un faible intervalle avec ce manchon (24).

4. Palier pour roulement (21) selon la revendication 3,
**caractérisé en ce que**
un élément élastique (35) est positionné entre le bord extérieur de la partie saillante radiale (34) de la deuxième partie de labyrinthe (30) et le fond de la gorge (33) du palier.

5. Palier pour roulement (21) selon la revendication 4,
**caractérisé en ce que**
l'élément élastique (35) est un joint torique élastique.

6. Palier pour roulement (21) selon l'une quelconque des revendications qui précèdent,
**caractérisé en ce que**
le manchon (24) de la première partie de joint du type labyrinthe située axialement à l'extérieur de l'emplacement prévu pour la gorge axiale (27) est muni de reliefs superficiels (36) dans la surface d'enveloppe extérieure, communiquant avec l'espace (28) servant de réservoir d'huile, lesquels reliefs sont destinés à ramener toute l'huile qui fuit à travers le joint du type labyrinthe jusqu'à l'espace servant de réservoir d'huile.
